(19) **Europäisches Patentamt** / **European Patent Office** / **Office européen des brevets**

(11) **EP 2 272 882 B1**

(12) **FASCICULE DE BREVET EUROPEEN**

(45) Date de publication et mention de la délivrance du brevet:
**31.08.2011 Bulletin 2011/35**

(21) Numéro de dépôt: **10167018.0**

(22) Date de dépôt: **23.06.2010**

(51) Int Cl.:
**C08F 255/00** (2006.01)  **C08J 3/24** (2006.01)
**C08L 51/00** (2006.01)  **C08L 51/06** (2006.01)
**C08L 101/10** (2006.01)  **H01B 3/30** (2006.01)

(54) **Composition réticulable pour câble d'énergie et/ou de télécommunication à base d'un cocktail silane et procédé de fabrication dudit câble**

Vernetzbare Zusammensetzung für Energie- und/oder Telekommunikationskabel auf der Basis einer Silanmischung, und Herstellungsverfahren dieses Kabels

Crosslinkable composition for power and/or telecommunication cable based on a silane cocktail and manufacturing method of said cable

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **09.07.2009 FR 0954783**

(43) Date de publication de la demande:
**12.01.2011 Bulletin 2011/02**

(73) Titulaire: **Nexans**
**75008 Paris (FR)**

(72) Inventeurs:
 • **Alric, Jérôme**
  **38080, L'ISLE D'ABEAU (FR)**
 • **Pinto, Olivier**
  **69003, LYON (FR)**
 • **Abeguile, Mikael**
  **69630, CHAPONOST (FR)**

(74) Mandataire: **Peguet, Wilfried et al**
 **Feray Lenne Conseil**
 **Le Centralis**
 **63, avenue du Général Leclerc**
 **92340 Bourg-la-Reine (FR)**

(56) Documents cités:
 **EP-A2- 0 169 069    EP-A2- 0 426 073**
 **US-A- 3 661 958    US-B1- 6 528 585**

 • **BOYER ET AL: "Toxicity of dibutyltin, tributyltin and other organotin compounds to humans and to experimental animals" TOXICOLOGY, LIMERICK, IR, vol. 55, no. 3, 15 mai 1989 (1989-05-15), pages 253-298, XP025570955 ISSN: 0300-483X [extrait le 1989-05-15]**

EP 2 272 882 B1

**Description**

La présente invention se rapporte à un câble d'énergie et/ou de télécommunication comprenant une couche polymérique extrudée et réticulée, ainsi qu'à un procédé de fabrication dudit câble.

De nombreux documents mentionnent des compositions réticulées utilisées dans le domaine de la câblerie, notamment à partir d'une première étape, bien connue sous le nom de procédé MONOSIL, consistant à extruder une composition réticulable comprenant du polyéthylène et des additifs tels qu'un générateur de radicaux libres, un organosilane insaturé hydrolysable et un catalyseur de réticulation du type dilaurate de dibutyl étain (DBTDL), et d'une deuxième étape consistant à réticuler en présence d'humidité et à température contrôlée la composition extrudée.

A titre d'exemple, on peut citer le document US 4 117 195. Dans ce document, la réticulation du polyéthylène est réalisée en présence des trois additifs mentionnés ci-avant, formant un « cocktail silane » pour obtenir une couche de polyéthylène extrudée et réticulée utilisée en câblerie.

Le document US2003/0134969 décrit également l'incorporation de ces trois additifs pour la réticulation d'une composition réticulable à base d'un polymère thermoplastique comprenant de 0,5 à 3% en poids d'organosilane insaturé hydrolysable, de 0,01 à 0,1% en poids de catalyseur de réticulation, et de 0,01 à 0,1% en poids d'un générateur de radicaux libres, dans la composition, également pour l'application câble. Le catalyseur de réticulation, utilisé de préférence dans la composition réticulable, est choisi parmi le dilaurate de dibutyl étain, le dilaurate de dioctyl étain et l'octoate d'étain.

Toutefois, la Demanderesse s'est aperçue que les concentrations de ces trois additifs associés à la réactivité d'un catalyseur de réticulation, au sein des compositions réticulables utilisées dans le domaine de la câblerie, notamment dans les procédés MONOSIL, n'étaient pas optimisées de sorte qu'il était courant d'obtenir la formation prématurée de gel (i.e. pré-gel) lors de l'extrusion du polyéthylène, ce pré-gel étant le signe d'une réaction de réticulation non maîtrisée qui débute de façon prématurée dans l'outillage de l'extrudeuse. Cette formation prématurée de gel crée des défauts d'extrusion sur la couche de polyéthylène extrudée, ce qui induit de ce fait des défauts diélectriques et/ou dimensionnels sur ladite couche.

En outre, la Directive européenne 67/548/EEC sur la régulation des substances dangereuses tend à proscrire l'utilisation des catalyseurs de réticulation à base de dibutyl étain du fait de leur caractère reprotoxique. En effet, ces catalyseurs contiennent inévitablement un sel de tributyl étain en teneur variable, formé lors de l'alkylation de l'étain, le tributyl étain étant considéré comme toxique pour la reproduction de l'espèce humaine par cette directive.

Le but de la présente invention est de pallier les inconvénients des techniques de l'art antérieur en proposant notamment une composition réticulable, utilisée comme couche polymérique extrudée et réticulée pour câble d'énergie et/ou de télécommunication, limitant de façon significative, voire évitant, la formation prématurée de gel, tout en garantissant une vitesse de réticulation optimisée en utilisant un catalyseur de réticulation non toxique pour la reproduction de l'espèce humaine.

La présente invention a pour objet un câble d'énergie et/ou de télécommunication comprenant une couche polymérique extrudée et réticulée obtenue à partir d'une composition réticulable comprenant un polymère apte à être réticulé par l'utilisation d'organosilane insaturé hydrolysable, et un cocktail silane, ledit cocktail silane comprenant un organosilane insaturé hydrolysable, un sel de dioctyl étain en tant que catalyseur de réticulation, et un générateur de radicaux libres, caractérisé en ce que la composition réticulable comprend un rapport R en poids d'organosilane insaturé hydrolysable sur le catalyseur de réticulation défini tel que :

- $8 \leq R \leq 15$, et
- lorsque $8 \leq R \leq 9$, la composition réticulable comprend au plus 1,1% en poids de cocktail silane,
- lorsque $9 \leq R \leq 10$, la composition réticulable comprend au plus 1,2% en poids de cocktail silane, et
- lorsque $10 \leq R \leq 15$, et de préférence lorsque $10 \leq R \leq 12$, la composition réticulable comprend au plus 1,5% en poids de cocktail silane.

En d'autres termes, le rapport R peut être défini comme étant égal à :

$$\frac{\text{\% en poids d'organosilane insaturé}}{\text{\% en poids de catalyseur de réticulation}}$$

les pourcentages (%) en poids de l'organosilane et du catalyseur étant ceux utilisés dans la composition réticulable.

Plus particulièrement, le cocktail silane est constitué essentiellement de l'organosilane insaturé hydrolysable, du catalyseur de réticulation, et du générateur de radicaux libres. De préférence, le cocktail silane comprend uniquement l'organosilane insaturé hydrolysable, le catalyseur de réticulation, et le générateur de radicaux libres.

Grâce à l'invention, la réactivité bien adaptée du sel de dioctyl étain dans les conditions d'extrusion en câblerie combinée au rapport spécifique R permettent avantageusement d'éviter la formation prématurée de gel (i.e. pré-gel) lors de l'extrusion de la composition réticulable, et ainsi d'obtenir une surface de la couche polymérique réticulée non altérée par la formation de pré-gel.

En outre, l'utilisation de catalyseurs de réticulation à base de dioctyl étain n'est pas proscrite par la Directive européenne 67/548/EEC sur la régulation des substances dangereuses. Ce catalyseur n'est donc pas reprotoxique puisqu'il ne comprend pas de sel de tributyl étain.

On entend par « câble d'énergie et/ou de télécommunication » tout câble électrique et/ou optique, destiné au transport d'énergie et/ou à la transmission de données.

Plus particulièrement, ce type de câble comprend un ou plusieurs conducteur(s) électrique(s) et/ou optique(s) entouré(s) par au moins une couche polymérique extrudée et réticulée conforme à l'invention. La couche polymérique extrudée et réticulée peut être une couche électriquement isolante en contact avec le ou les conducteur(s) électrique(s) et/ou optique(s). Elle peut être également une gaine de protection entourant un ou plusieurs conducteur(s) électrique(s) et/ou optique(s) électriquement isolé(s).

Le câble d'énergie et/ou de télécommunication préféré dans le cadre de l'invention est un câble de distribution basse tension (1 kV) comportant un conducteur électrique, notamment en cuivre, entouré par une couche polymérique extrudée et réticulée conforme à l'invention du type couche électriquement isolante directement en contact physique avec ledit conducteur électrique.

Selon l'invention, quelque soit le rapport R, il est préférable que la composition réticulable comprenne au moins 0,8% en poids de cocktail silane, et de préférence au moins 0,9% en poids de cocktail silane.

La limite inférieure de 0,8% en poids permet avantageusement d'atteindre une densité de greffage suffisante de façon à ce que la densité de réticulation permette de conférer à la couche polymérique extrudée et réticulée les propriétés thermomécaniques requises, telles que la résistance au fluage à haute température, selon notamment la norme EN60811-2-1. En outre, elle permet d'assurer une vitesse de réticulation de la composition réticulable dans des conditions d'humidité et de température ambiante en quelques jours. Dans ces conditions, on peut éviter avantageusement le passage systématique de la couche polymérique extrudée (non encore réticulée) dans une piscine ou sauna.

Le cocktail silane peut comprendre de 80 à 90% en poids d'organosilane insaturé hydrolysable, et de préférence de 85 à 87% en poids d'organosilane insaturé hydrolysable.

Le cocktail silane peut comprendre avantageusement de 6 à 10% en poids de sel de dioctyl étain, et de préférence de 6 à 8% en poids de sel de dioctyl étain.

La quantité de générateurs de radicaux libres dans le cocktail silane peut être environ 10 à 15 fois moins grande que la quantité d'organosilane insaturé hydrolysable. Par exemple, le cocktail silane peut comprendre de 5 à 8% en poids de générateur de radicaux libres, et de préférence de 5 à 6% en poids de générateur de radicaux libres.

Dans un mode de réalisation particulier, la couche polymérique extrudée et réticulée selon l'invention peut comprendre avantageusement de 700 à 1350 ppm de sel de dioctyl étain, et de préférence de 900 à 1100 ppm de sel de dioctyl étain.

Dans la présente invention, l'abréviation « ppm » signifie « parties par million massiques».

La composition réticulable comme la couche polymérique extrudée et réticulée contiennent sensiblement la même quantité de catalyseur de réticulation (sel de dioctyl étain). La quantité de catalyseur de réticulation dans la couche polymérique extrudée et réticulée peut être déterminée facilement en mesurant la quantité de l'élément étain dans ladite couche polymérique, puis en déduisant la concentration du catalyseur de réticulation à partir de cette quantité en prenant en considération la forme hydrolysée du sel de dioctyl étain ainsi que la forme complètement condensée du polymère greffé silane obtenu lorsque l'organosilane insaturé hydrolysable est greffé au polymère.

Les techniques utilisées le plus couramment pour la détermination des concentrations à l'état de traces d'éléments dans des échantillons sont basées sur la spectrométrie d'émission atomique (SEA). Des sources thermiques comme les flammes, les fours, et les décharges électriques sont utilisées pour dissocier les molécules échantillons en atomes libres. Plus récemment, d'autres types de décharges électriques, dénommées plasmas, ont été utilisées comme sources d'atomisation/de stimulation pour la SEA. Ces techniques comprennent le plasma inductif (ICP) et le plasma couplé direct (DCP).

La couche polymérique extrudée et réticulée peut comprendre un rapport R' en poids d'organosilane insaturé hydrolysable sur le catalyseur de réticulation sensiblement égal, voire inférieur, au rapport R de la composition réticulable (i.e. R' ≤ R). Cette différence entre les rapports R et R' provient du fait qu'une partie de l'organosilane insaturé hydrolysable peut ne pas avoir réagi avec le polymère durant le procédé d'extrusion, notamment à cause de la volatilité dudit organosilane. Par conséquent, la couche polymérique réticulée peut comprendre de préférence un rapport R' de 6,5 à 15.

Le polymère apte à être réticulé par l'utilisation d'organosilane insaturé hydrolysable peut être classiquement un polymère apte à être extrudable, ou en d'autres termes, apte à être mise en forme à travers la filière d'une extrudeuse.

De préférence, le polymère est de type thermoplastique ou élastomère.

Il peut être choisi avantageusement parmi les homopolymères d'oléfine et les copolymères d'oléfine, ou un de leurs mélanges, et plus particulièrement parmi les homopolymères d'éthylène et les copolymères d'éthylène, ou un de leurs mélanges. De façon plus générale, on peut dire que le polymère de l'invention est préférentiellement un polymère d'oléfine.

L'organosilane insaturé hydrolysable de l'invention peut répondre à la formule générale $R^1R^2SiY_2$, où $R^1$ représente un groupement hydrocarboné ou hydrocarbonoxy monovalent insaturé, Y représente un groupement organique hydrolysable, et $R^2$ représente soit $R^1$, soit Y.

Les exemples concernant la nature de $R^1$ sont nombreux et peuvent notamment être de type vinyl, allyl, butenyl, cyclohexenyl, cyclopentadienyl, cyclohexanedienyl, $CH_2=C(CH_3)COO-(CH_2)_3-$, $CH_2=C(CH_3)COO-CH_2-CH_2O-(CH_2)_3$ et $CH_2=C(CH_3)COO-CH_2-CH_2O-CH_2-CH(OH)-CH_2O-(CH_2)_3-$. Préférentiellement, $R^1$ est un groupement vinyl.

Le groupement hydrolysable Y peut être un groupement alcoxy tel qu'un méthoxy, éthoxy ou butoxy, un groupement acyloxy, formyloxy, acétoxy ou propionoxy. Préférentiellement, le silane contient trois groupes hydrolysables tel que le vinyltriméthoxy silane ou le vinyl triéthoxysilane.

Comme silane insaturé hydrolysable, on peut citer le vinyltriméthoxysilane (VTMO) ou le vinyltriéthoxysilane (VTEO).

Le catalyseur de réticulation de l'invention est du type catalyseur d'hydrolyse et de condensation de fonctions silanol. A titre d'exemple, on peut citer comme catalyseur de réticulation le dilaurate de dioctyl étain (DOTDL) ou le diacétate de dioctyl étain (DOTDA). On préférera utiliser le DOTDL pour sa très bonne miscibilité avec les polymères d'éthylène (homopolymères ou copolymères d'éthylène) du fait des longues chaînes alkyles apolaires des groupements laurates qui le composent.

Les générateurs de radicaux libres les plus adaptés dans la présente invention sont préférentiellement les peroxydes organiques et les peresters organiques comme par exemple le peroxyde de benzoyle, le peroxyde de dichlorobenzoyle, le peroxyde de dicumyle, le peroxyde de di-tertiobutyl, le peroxyde de tertbutyl cumyle, le 2,5-diméthyl-2,5-di(peroxybenzoate) hexine-3, le 1,3-bis(tertbutyl peroxy isopropyl) benzene, le peroxyde de lauroyle, le tertbuyl peracetate, le 2,5 dimethyl-2,5-di(tertbutylperoxy)hexyne-3, le 2,5-dimethyl-2,5-di-(tertbutylperoxy)hexane et le perbenzoate de tertbutyl.

Les générateurs de radicaux libres sont choisis en fonction de la température à laquelle la réaction de greffage de l'organosilane insaturé hydrolysable sur le polymère se réalise.

En général, lesdits générateurs sont choisis de façon à ce qu'ils aient une température de décomposition supérieure à 140°C. Ainsi, ils ont un temps de demi-vie inférieur à 6 minutes. En conséquence, lorsque la réaction est réalisée entre 190°C et 200°C, le peroxyde de dicumyle, qui présente un temps de demi-vie d'environ 15 secondes, est particulièrement adapté. Si la réaction doit être réalisée à 150°C, un autre peroxyde sera utilisé, tel que le peroxyde de benzoyle.

Un autre objet de l'invention concerne un procédé de fabrication d'une couche polymérique extrudée et réticulée d'un câble tel que décrit ci-avant, ledit procédé comprenant les étapes consistant à :

    i. mélanger une composition réticulable telle que définie ci-avant afin de greffer l'organosilane insaturé hydrolysable sur ledit polymère pour obtenir un polymère greffé silane,

    ii. extruder le polymère greffé silane obtenu à l'étape i pour former une couche polymérique extrudée (non réticulée), et

    iii. réticuler la couche polymérique extrudée obtenue à l'étape ii pour former une couche polymérique réticulée.

De préférence, l'étape de mélange i est réalisée au sein d'une extrudeuse.

L'étape de greffage de l'organosilane insaturé hydrolysable au polymère est réalisée selon un procédé d'addition radicalaire, en présence d'un composé capable de générer des radicaux libres sur le polymère. Le procédé est bien connu sous le nom de procédé MONOSIL. L'avantage de ce procédé est qu'il permet d'effectuer l'étape de greffage i et l'étape d'extrusion ii au sein du même appareillage, à savoir une extrudeuse comportant de préférence un rapport longueur de vis sur diamètre de vis au moins égal à 30.

L'étape de réticulation iii du procédé selon l'invention peut être typiquement réalisée en présence d'humidité et à température contrôlée.

D'autres caractéristiques et avantages de la présente invention apparaîtront à la lumière des exemples qui vont suivre, lesdits exemples étant donnés à titre illustratif et nullement limitatif.

Des exemples de couches polymériques extrudées et réticulées sont rapportés aux exemples 1 à 3.

Plus particulièrement, dans l'exemple 1, un cocktail silane, préalablement préparé, est mélangé à du polyéthylène pour former une couche polymérique sous forme de ruban.

Dans l'exemple 2, les additifs qui composent le cocktail silane sont mélangés à du polyéthylène pour former une couche polymérique entourant un conducteur électrique.

Dans l'exemple 3, un cocktail silane, préalablement préparé, est mélangé à du polyéthylène pour former une couche polymérique entourant un conducteur électrique.

### Exemple 1

#### 1.1. Mélange et extrusion de compositions réticulables

Différentes compositions réticulables, compositions C1 à C4 détaillées dans le tableau 1 ci-après, ont été préparées en mélangeant :

- un polyéthylène linéaire basse densité (LLDPE) commercialisé par la société INEOS sous la référence BPD3042, et

- un cocktail silane, préalablement préparé, contenant les trois additifs liquides suivants :

  - un organosilane insaturé hydrolysable (Silane) du type vinyltrimethoxysilane (VTMO), commercialisé par la société EVONIK sous la référence UN 1993 Dynasilan VTMO,

  - un générateur de radicaux libres du type peroxyde de dicumyle (DCP), commercialisé par la société AKZO sous la référence Perkadox BC-FF, et

  - un catalyseur de réticulation du type dilaurate de dioctyl étain (DOTDL), commercialisé par la société TIB Chemicals sous la référence TIB KAT 216.

**Tableau 1**

| Compositions réticulables | | C1 | C2 | C3 | C4 |
|---|---|---|---|---|---|
| Cocktail silane (% en poids) | VTMO | 88 | 87 | 86 | 85 |
| | DCP | 6 | 5,9 | 6 | 6 |
| | DOTDL | 6 | 7,1 | 8 | 9 |
| Rapport en poids Silane/Catalyseur, dans la composition réticulable (calculé) | | 14,7 | 12,2 | 10,75 | 9,4 |
| LLDPE (% en poids) dans la composition réticulable | | 98,5 | | | |
| Cocktail silane (% en poids) dans la composition réticulable | | 1,5 | | | |
| Quantité de catalyseur en ppm dans la composition réticulable (calculé) | | 900 | 1065 | 1200 | 1350 |

Le cocktail silane ainsi que le LLDPE sont mélangés au sein d'une extrudeuse monovis (Dimensions : L/D = 30 et Diamètre = 40 mm) qui présente l'avantage d'avoir une vis double filet et d'être suffisamment longue pour greffer l'organosilane insaturé hydrolysable, le cocktail silane et le LLDPE étant préalablement introduits par la trémie de l'extrudeuse.
L'extrudeuse présente quatre zones de chauffe respectivement de 60°C, 180°C, 190°C et 200°C avec une température en tête d'extrudeuse de 220°C. La température au sein de l'extrudeuse permet de décomposer le peroxyde organique afin de greffer le VTMO au LLDPE. Le débit et la pression au sein de l'extrudeuse sont respectivement de 4,5 kg/heure et de 80 Bars.
La composition réticulable ainsi mélangée est mise en forme (extrudée) à travers une filière ruban (20 mm largeur / 1 mm épaisseur) pour obtenir un ruban.

#### 1.2. Réticulation des compositions extrudées

La réticulation de la matrice polyéthylène de chaque composition extrudée C1 à C4 à été réalisée dans les conditions suivantes :

- soit par un traitement dit de réticulation accélérée : le ruban est placé dans l'eau à 63°C pendant 24 heures ;

- soit par un traitement dit d'auto-réticulation : le ruban est placé à une température de 25°C dans une humidité relative de 50% pendant 14 jours.

Les rubans extrudés obtenus à partir des compositions C1 à C4 sont alors réticulés et forment respectivement des couches polymériques extrudées et réticulées Cpr1 à Cpr4.

### 1.3. Résultats

La méthode choisie pour évaluer la densité de réticulation est celle de la mesure du fluage à chaud sous charge selon la norme NF EN60811-2-1. Le test correspondant est communément désigné par l'anglicisme Hot Set Test. Les résultats sont rassemblés dans le tableau 2 ci-après.

Il consiste concrètement à lester une extrémité d'une éprouvette de matériau avec une masse correspondant à l'application d'une contrainte équivalente à 0,2MPa, et à placer l'ensemble dans une étuve chauffée à 200°C +/- 1°C pendant une durée de 15 minutes. Au terme de ce délai, on relève l'allongement à chaud sous charge de l'éprouvette, exprimé en %. La masse suspendue est alors retirée, et l'éprouvette est maintenue dans l'étuve pendant 5 nouvelles minutes. L'allongement permanent restant, également appelé rémanence, est alors mesuré avant d'être exprimé en %.

On rappelle que plus un matériau est réticulé, plus les valeurs d'allongement et de rémanence seront faibles. On précise par ailleurs que dans le cas où une éprouvette viendrait à se rompre en cours d'essai, sous l'action conjuguée de la contrainte mécanique et de la température, le résultat au test serait alors logiquement considéré comme un échec.

**Tableau 2**

| Couches polymériques extrudées et réticulées | Cpr1 | Cpr2 | Cpr3 | Cpr4 |
|---|---|---|---|---|
| Qualité de la surface après extrusion | Lisse | Lisse | Lisse | Présence de pré-gel |
| Conditions de réticulation | 63°C / immersion dans l'eau 24 heures | | | |
| % d'élongation à chaud sous charge | 50% | 50% | 25% | 30% |
| % d'élongation rémanente | 0% | 0% | 0% | 0% |
| Conditions de réticulation | 25°C / 50% d'humidité relative 14 jours | | | |
| % d'élongation à chaud sous charge | 95% | 100% | 70% | 70% |
| % d'élongation rémanente | 15% | 15% | 0% | 5% |

On remarque que pour les compositions réticulables C1 à C3 comprenant à l'origine 1,5% en poids de cocktail silane, avec des rapports R respectifs de 14,7, 12,2 et 10,75, les couches polymériques obtenues Cpr1 à Cpr3 n'engendrent pas la formation de pré-gel, contrairement à la couche polymérique Cpr4 (avec R = 9,4). Pour une telle concentration de cocktail silane mise en jeu (1,5% en poids), le rapport R en poids « Silane/DOTDL » idéal se situe autour de 10,75.

Au delà d'une valeur R égale à 15, pour une concentration de cocktail silane d'au plus 1,5% en poids dans la composition réticulable, la vitesse de réticulation est affectée. En dessous d'une valeur R égale à 10, pour une concentration de cocktail silane d'au plus 1,5% en poids dans la composition réticulable, c'est la qualité de surface de la couche polymérique réticulée qui est altérée avec la formation de pré-gel.

### **Exemple 2**

#### 2.1.Mélange et extrusion d'une composition réticulable

Une composition réticulable C5, détaillée dans le tableau 3 ci-après, a été préparée en mélangeant :

- un polyéthylène linéaire basse densité (LLDPE) commercialisé par la société EXXON sous la référence HOSTALON LL4004 EL,

- un antioxydant commercialisé par la société CIBA sous la référence IRGANOX 1076FD, et

- les trois additifs liquides suivants :

  - un organosilane insaturé hydrolysable (Silane) du type vinyltrimethoxysilane (VTMO), commercialisé par la société EVONIK sous la référence UN 1993 Dynasilan VTMO,

- un générateur de radicaux libres du type tert-butyl cumyl peroxyde (TBCP), commercialisé par la société ARKEMA sous la référence Luperox 801, et

- un catalyseur de réticulation du type dilaurate de dioctyl étain (DOTDL), commercialisé par la société TIB Chemicals sous la référence TIB KAT 216.

Les trois additifs liquides formant un cocktail silane ainsi que le LLDPE et l'antioxydant sont mélangés au sein d'une extrudeuse monovis (Dimensions : L/D = 30 et Diamètre = 220mm) qui présente l'avantage d'avoir une vis double filet et d'être suffisamment longue pour greffer l'organosilane insaturé hydrolysable au polymère.

Les trois additifs liquides, le LLDPE et l'antioxydant sont préalablement acheminés via une pompe doseuse vers un turbomixeur continu situé au dessus de la trémie de l'extrudeuse afin de mélanger intimement lesdits additifs liquides avec les granulés de LLDPE et l'antioxydant, puis sont introduits par la trémie de l'extrudeuse.

L'extrudeuse présente sept zones de chauffe respectivement de 150°C, 160°C, 175°C, 185°C, 200°C, 210°C et 210°C avec une température en tête d'extrudeuse de 210°C. La température au sein de l'extrudeuse permet de décomposer le peroxyde organique afin de greffer le VTMO au LLDPE. Le débit au sein de l'extrudeuse est de 78 kg/heure et la vitesse de ligne est de 100 m/minute.

La composition réticulable ainsi mélangée est mise en forme (extrudée) autour d'un conducteur multibrin de section transversale de 10 mm$^2$ pour obtenir un fil conducteur isolé avec une couche polymérique extrudée.

**Tableau 3**

| Composition réticulable | | C5 |
|---|---|---|
| Additifs incorporés (% en poids) | VTMO | 82,6 |
| | TBCP | 7,3 |
| | DOTDL | 10,1 |
| Rapport en poids Silane/Catalyseur, dans la composition réticulable (calculé) | | 8,2 |
| LLDPE (% en poids dans la composition réticulable) | | 98,11 |
| Cocktail silane (% en poids dans la composition réticulable) | | 1,09 |
| Antioxydant (% en poids dans la composition réticulable) | | 0,8 |
| Quantité de catalyseur en ppm dans la composition réticulable (calculé) | | 1100 |

2.2. Réticulation de la composition extrudée

La réticulation de la matrice polyéthylène de la composition extrudée C6 à été réalisée dans les conditions suivantes :

- soit par un traitement dit de réticulation accélérée : le fil conducteur isolé est placé dans l'eau à 95°C pendant 30 minutes ;
- soit par un traitement dit d'auto-réticulation : le fil conducteur isolé est placé à une température de 25°C dans une humidité relative de 50% pendant quatre jours.

Le fil conducteur est ainsi isolé avec une couche polymérique extrudée et réticulée Cpr5.

2.3. Résultats

La méthode choisie pour évaluer la densité de réticulation est celle de la mesure du fluage à chaud sous charge selon la norme NF EN60811-2-1 telle que précédemment décrite.

L'élongation à chaud mesurée sur la couche polymérique extrudée et réticulée Cpr5 (obtenue à partir de la composition C5) du fil conducteur isolé que ce soit après le traitement dit de réticulation accélérée ou le traitement dit d'auto-réticulation, est de 25%.

Ainsi, pour un rapport R compris entre 8 et 9, à savoir 8,2, une quantité d'au plus 1,1% en poids de cocktail silane dans la composition permet d'obtenir une couche polymérique Cpr5 lisse, exempte de pré-gel, avec une densité de réticulation constante sur l'ensemble de ladite couche.

Dans la couche polymérique Cpr5 ont été mesurés le rapport R' ainsi que la quantité de catalyseur de réticulation.

Les valeurs sont rassemblées dans le tableau 4 ci-après.

Les mesures consistent à déterminer, par analyse élémentaire :

- la quantité de l'élément étain dans la couche polymérique Cpr5, pour en déduire le % en poids du catalyseur de réticulation dans ladite couche, et

- la quantité de l'élément silicium dans la couche polymérique Cpr5, pour en déduire le % en poids d'organosilane insaturé hydrolysable dans ladite couche.

Comme mentionnée précédemment, les concentrations en éléments étain et silicium ont été obtenues par spectrométrie d'émission atomique couplée au plasma inductif (ICP-SEA).

**Tableau 4**

| Couche polymérique extrudée et réticulée | Cpr5 |
|---|---|
| Rapport en poids Silane/Catalyseur, dans la couche polymérique extrudée et réticulée (mesuré) | 7,1 |
| Quantité de catalyseur en ppm dans la couche polymérique extrudée et réticulée (mesuré) | 1311 |

La différence entre les rapports R et R' Silane/Catalyseur du tableau 3 (composition réticulable C5) et du tableau 4 (couche polymérique extrudée et réticulée Cpr5) réside dans le fait qu'une partie du silane n'a pas réagi lors de l'étape de greffage, notamment à cause de sa volatilité à haute température au sein de l'extrudeuse.

### Exemple 3

#### 3.1. Mélange et extrusion de compositions réticulables

Une composition réticulable C6, détaillée dans le tableau 5 ci-après, a été préparée en mélangeant :

- un polyéthylène linéaire basse densité (LLDPE) commercialisé par la société INEOS sous la référence BPD3042,

- un antioxydant commercialisé par la société CIBA sous la référence IRGANOX 1076FD, et

- un cocktail silane, préalablement préparé, contenant les trois additifs liquides suivants :

  - un organosilane insaturé hydrolysable (Silane) du type vinyltrimethoxysilane (VTMO), commercialisé par la société EVONIK sous la référence UN 1993 Dynasilan VTMO,

  - un générateur de radicaux libres du type peroxyde de dicumyle (DCP), commercialisé par la société AKZO sous la référence Perkadox BC-FF, et

  - un catalyseur de réticulation du type dilaurate de dioctyl étain (DOTDL), commercialisé par la société TIB Chemicals sous la référence TIB KAT 216.

Le cocktail silane ainsi que le LLDPE et l'antioxydant sont mélangés au sein d'une extrudeuse monovis (Dimensions : L/D = 30 - Diamètre = 150 mm) qui présente l'avantage d'avoir une vis double filet et d'être suffisamment longue pour greffer l'organosilane insaturé hydrolysable, le cocktail silane, le LLDPE et l'antioxydant étant préalablement introduits par la trémie de l'extrudeuse.

L'extrudeuse présente sept zones de chauffe respectivement de 140°C, 150°C, 170°C, 180°C, 200°C, 230°C et 250°C avec une température en tête d'extrudeuse de 260°C. La température au sein de l'extrudeuse permet de décomposer le peroxyde organique afin de greffer le VTMO au LLDPE. Le débit au sein de l'extrudeuse est de 78 kg/ heure et la vitesse de ligne est de 100 m/minute.

La composition réticulable ainsi mélangée est mise en forme (extrudée) autour de divers types de conducteurs multibrin de section transversale de 6, 10 ou 16 mm$^2$ pour obtenir respectivement un fil conducteur isolé avec une couche polymérique extrudée.

**Tableau 5**

| Composition réticulable | | C6 |
|---|---|---|
| Additifs incorporés (% en poids) | VTMO | 86 |
| | TBCP | 6 |
| | DOTDL | 8 |
| Rapport en poids Silane/Catalyseur, dans la composition réticulable (calculé) | | 10,75 |
| LLDPE (% en poids dans la composition réticulable) | | 98,0 |
| Cocktail silane (% en poids dans la composition réticulable) | | 1,2 |
| Antioxydant (% en poids dans la composition réticulable) | | 0,8 |
| Quantité de catalyseur en ppm dans la composition réticulable (calculé) | | 960 |

3.2. Réticulation des compositions extrudées

La réticulation de la matrice polyéthylène de la composition extrudée C6 à été réalisée dans les conditions suivantes :

- soit par un traitement dit de réticulation accélérée : le fil conducteur isolé est placé dans l'eau à 90°C pendant 1 heure ;

- soit par un traitement dit d'auto-réticulation : le fil conducteur isolé est placé à une température de 25°C dans une humidité relative de 50% pendant 4 et 7 jours.

Le fil conducteur est ainsi isolé avec une couche polymérique extrudée et réticulée Cpr6.

3.3. Résultats

La méthode choisie pour évaluer la densité de réticulation est celle de la mesure du fluage à chaud sous charge selon la norme NF EN60811-2-1 telle que précédemment décrite. Les résultats sont rassemblés dans le tableau 6 ci-après.

**Tableau 6**

| Couche polymérique réticulée | Qualité de l'extrusion | | Propriétés mécaniques | | Test de fluage à chaud - Elongation à chaud | | |
|---|---|---|---|---|---|---|---|
| | Longueur produite (km) | Nombre défaut par km | Elongation à la rupture (%) | Contrainte à la rupture (MPa) | Eau 90°C /1 heure | 25°C - 50% d'humidité relative | |
| | | | | | | t = 4 jours | t = 7 jours |
| Cpr6 | 2500 | 0,4 | 400 | 17 | 25% | 60% | 25% |

Dans le tableau 6, le nombre de défaut par kilomètre est classiquement appelé « nombre de défaut de Sparker ». La méthode de détermination du nombre de défaut de Sparker est réalisé selon la norme IEC 62230 avec à une tension électrique de 5kV appliquée au fil conducteur isolé.

L'élongation à chaud mesurée sur la couche polymérique extrudée et Cpr6 (obtenue à partir de la composition C6) du fil conducteur isolé que ce soit après le traitement dit de réticulation accélérée ou le traitement dit d'auto-réticulation, est de 25%.

Pour un rapport R compris entre 10 et 15, à savoir 10,75, une quantité d'au plus 1,5% en poids de cocktail silane dans la composition permet d'obtenir une couche polymérique Cpr6 lisse, exempte de pré-gel, avec une densité de réticulation constante sur l'ensemble de ladite couche.

**Revendications**

**1.** Câble d'énergie et/ou de télécommunication comprenant une couche polymérique extrudée et réticulée obtenue à partir d'une composition réticulable comprenant un polymère apte à être réticulé par l'utilisation d'organosilane insaturé hydrolysable, et un cocktail silane comprenant un organosilane insaturé hydrolysable, un sel de dioctyl étain en tant que catalyseur de réticulation, et un générateur de radicaux libres, **caractérisé en ce que** la composition réticulable comprend un rapport R en poids d'organosilane insaturé hydrolysable sur le catalyseur de réticulation défini tel que :

- $8 \leq R \leq 15$, et
- lorsque $8 \leq R \leq 9$, la composition réticulable comprend au plus 1,1% en poids de cocktail silane,
- lorsque $9 \leq R \leq 10$, la composition réticulable comprend au plus 1,2% en poids de cocktail silane, et
- lorsque $10 \leq R \leq 15$, la composition réticulable comprend au plus 1,5% en poids de cocktail silane.

2. Câble selon la revendication 1, **caractérisé en ce que** le cocktail silane est constitué essentiellement de l'organosilane insaturé hydrolysable, du catalyseur de réticulation, et du générateur de radicaux libres.

3. Câble selon la revendication 1 ou 2, **caractérisé en ce que** le cocktail silane comprend de 80 à 90% en poids d'organosilane insaturé hydrolysable.

4. Câble selon l'une quelconque des revendications précédentes, **caractérisé en ce que** le cocktail silane comprend de 6 à 10% en poids de sel de dioctyl étain.

5. Câble selon l'une quelconque des revendications précédentes, **caractérisé en ce que** le cocktail silane comprend de 5 à 8% en poids de générateur de radicaux libres.

6. Câble selon l'une quelconque des revendications précédentes, **caractérisé en ce que** la couche polymérique extrudée et réticulée comprend de 700 à 1350 ppm de sel de dioctyl étain.

7. Câble selon l'une quelconque des revendications précédentes, **caractérisé en ce que** la couche polymérique extrudée et réticulée comprend un rapport R' en poids d'organosilane insaturé hydrolysable sur le catalyseur de réticulation inférieur ou égale à 15.

8. Câble selon l'une quelconque des revendications précédentes, **caractérisé en ce que** le polymère est choisi parmi les homopolymères d'oléfine et les copolymères d'oléfine, ou un de leurs mélanges.

9. Câble selon l'une quelconque des revendications précédentes, **caractérisé en ce que** le polymère est choisi parmi les homopolymères d'éthylène et les copolymères d'éthylène, ou un de leurs mélanges.

10. Câble selon l'une quelconque des revendications précédentes, **caractérisé en ce que** l'organosilane insaturé hydrolysable est le vinyltriméthoxysilane (VTMO) ou le vinyltriéthoxysilane (VTEO).

11. Câble selon l'une quelconque des revendications précédentes, **caractérisé en ce que** le sel de dioctyl étain est le dilaurate de dioctyl étain (DOTDL).

12. Câble selon l'une quelconque des revendications précédentes, **caractérisé en ce que** le générateur de radicaux libres est choisi parmi les peroxydes organiques et les peresters organiques.

13. Procédé de fabrication d'une couche polymérique extrudée et réticulée d'un câble selon les revendications 1 à 12, ledit procédé comprenant les étapes consistant à :

i. mélanger une composition réticulable telle que définie aux revendications 1 à 12 afin de greffer l'organosilane instauré hydrolysable au polymère pour obtenir un polymère greffé silane,
ii. extruder le polymère greffé silane obtenu à l'étape i pour former une couche polymérique extrudée, et
iii. réticuler la couche polymérique extrudée obtenue à l'étape ii pour former une couche polymérique réticulée.

14. Procédé selon la revendication 13, **caractérisé en ce que** l'étape de mélange i est réalisée au sein d'une extrudeuse.

**Claims**

1. A power and/or telecommunications cable comprising an extruded and cross-linked polymeric layer obtained from a cross-linkable composition comprising a polymer capable of being cross-linked by the use of a hydrolyzable unsaturated organosilane, and a silane cocktail comprising a hydrolyzable unsaturated organosilane, a dioctyl tin salt as a cross-linking catalyst, and a generator of free radicals, **characterized in that** the cross-linkable composition comprises a weight ratio R of hydrolyzable unsaturated organosilane over the cross-linking catalyst, defined such that:

- $8 \leq R \leq 15$, and
- when $8 \leq R \leq 9$, the cross-linkable composition comprises at most 1.1% by weight of silane cocktail,
- when $9 \leq R \leq 10$, the cross-linkable composition comprises at most 1.2% by weight of silane cocktail,
- when $10 \leq R \leq 15$, the cross-linkable composition comprises at most 1.5% by weight of silane cocktail.

2. The cable according to claim 1, **characterized in that** the silane cocktail essentially consists of the hydrolyzable unsaturated organosilane, of the cross-linking catalyst, and of the generator of free radicals.

3. The cable according to claim 1 or 2, **characterized in that** the silane cocktail comprises from 80 to 90% by weight of hydrolyzable unsaturated organosilane.

4. The cable according to any of the preceding claims, **characterized in that** the silane cocktail comprises from 6 to 10% by weight of dioctyl tin salt.

5. The cable according to any of the preceding claims, **characterized in that** the silane cocktail comprises from 5 to 8% by weight of free radical generator.

6. The cable according to any of the preceding claims, **characterized in that** the extruded and cross-linked polymeric layer comprises from 700 to 1,350 ppm of dioctyl tin salt.

7. The cable according to any of the preceding claims, **characterized in that** the extruded and cross-linked polymeric layer comprises a weight ratio R' of hydrolyzable unsaturated organosilane over the cross-linking catalyst of less than or equal to 15.

8. The cable according to any of the preceding claims, **characterized in that** the polymer is selected from olefin homopolymers and olefin copolymers, or from one of their mixtures.

9. The cable according to any of the preceding claims, **characterized in that** the polymer is selected from ethylene homopolymers and ethylene copolymers, or from one of their mixtures.

10. The cable according to any of the preceding claims, **characterized in that** the hydrolyzable unsaturated organosilane is vinyltrimethoxysilane (VTMO) or vinyltriethoxysilane (VTEO).

11. The cable according to any of the preceding claims, **characterized in that** the dioctyl tin salt is dioctyl tin dilaurate (DOTDL).

12. The cable according to any of the preceding claims, **characterized in that** the generator of free radicals is selected from organic peroxides and organic peresters.

13. A method for making an extruded and cross-linked polymeric layer of a cable according to claims 1 to 12, said method comprising the steps:

i. mixing a cross-linkable composition as defined in claims 1 to 12 in order to graft the hydrolyzable unsaturated organosilane to the polymer in order to obtain a silane-grafted polymer,
ii. extruding the silane-grafted polymer obtained in step i in order to form an extruded polymeric layer, and
iii. cross-linking the extruded polymeric layer obtained in step ii in order to form a cross-linked polymeric layer.

14. The method according to claim 13, **characterized in that** the mixing step i is performed within an extruder.

**Patentansprüche**

1. Energie- und/oder Telekommunikationskabel, das eine vernetzte und extrudierte Polymerschicht umfasst, die aus einer vernetzbaren Zusammensetzung hergestellt ist, die ein Polymer umfasst, das imstande ist, durch den Einsatz von hydrolysierbarem ungesättigtem Organosilan vernetzt zu se i n, und eine Silanmischung, die ein hydrolysierbares ungesättigtes Organosilan, ein Dioctylzinnsalz als Vernetzungskatalysator und einen Erzeuger freier Radikale umfasst, **dadurch gekennzeichnet, dass** die vernetzbare Zusammensetzung ein Gewichtsverhältnis R hydrolysierbares ungesättigtes Organosilan zum Vernetzungskatalysator umfasst, das wie folgt definiert ist:

- $8 \leq R \leq 15$ und
- wenn $8 \leq R \leq 9$, die vernetzbare Zusammensetzung höchstens 1,1 Gew.-% Silanmischung umfasst,
- wenn $9 \leq R \leq 10$, die vernetzbare Zusammensetzung höchstens 1,2 Gew.-% Silanmischung umfasst, und
- wenn $10 \leq R \leq 15$, die vernetzbare Zusammensetzung höchstens 1,5 Gew.-% Silanmischung umfasst.

2. Kabel nach Anspruch 1, **dadurch gekennzeichnet, dass** die Silanmischung im Wesentlichen aus dem hydrolysierbaren ungesättigten Organosilan, dem Vernetzungskatalysator und dem Erzeuger freier Radikale besteht.

3. Kabel nach Anspruch 1 oder 2, **dadurch gekennzeichnet, dass** die Silanmischung 80 bis 90 Gew.-% hydrolysierbares ungesättigtes Organosilan umfasst.

4. Kabel nach einem der vorangehenden Ansprüche, **dadurch gekennzeichnet, dass** die Silanmischung 6 bis 10 Gew.-% Dioctylzinnsalz umfasst.

5. Kabel nach einem der vorangehenden Ansprüche, **dadurch gekennzeichnet, dass** die Silanmischung 5 bis 8 Gew.-% Erzeuger freier Radikale umfasst.

6. Kabel nach einem der vorangehenden Ansprüche, **dadurch gekennzeichnet, dass** die vernetzte und extrudierte Polymerschicht 700 bis 1350 ppm Dioctylzinnsalz umfasst.

7. Kabel nach einem der vorangehenden Ansprüche, **dadurch gekennzeichnet, dass** die vernetzte und extrudierte Polymerschicht ein Gewichtsverhältnis R' hydrolysierbares ungesättigtes Organosilan zum Vernetzungskatalysator umfasst, das kleiner oder gleich 15 ist.

8. Kabel nach einem der vorangehenden Ansprüche, **dadurch gekennzeichnet, dass** das Polymer aus den Olefin-Homopolymeren und den Olefin-Copolymeren oder einem ihrer Gemische ausgewählt ist.

9. Kabel nach einem der vorangehenden Ansprüche, **dadurch gekennzeichnet, dass** das Polymer aus den Ethylen-Homopolymeren und den Ethylen-Copolymeren oder einem ihrer Gemische ausgewählt ist.

10. Kabel nach einem der vorangehenden Ansprüche, **dadurch gekennzeichnet, dass** das hydrolysierbare ungesättigte Organosilan das Vinyltrimethoxysilan (VTMO) oder das Vinyltriethoxysilan (VTEO) ist.

11. Kabel nach einem der vorangehenden Ansprüche, **dadurch gekennzeichnet, dass** das Dioctylzinnsalz das Dioctylzinndilaurat (DOTDL) ist.

12. Kabel nach einem der vorangehenden Ansprüche, **dadurch gekennzeichnet, dass** der Erzeuger freier Radikale aus den organischen Peroxyden und den organischen Perestern ausgewählt ist.

13. Verfahren zur Herstellung einer vernetzten und extrudierten Polymerschicht eines Kabels nach einem der Ansprüche 1 bis 12, wobei das Verfahren die Schritte umfasst, die bestehen im:

i. Mischen einer vernetzbaren Zusammensetzung, so wie in den Ansprüchen 1 bis 12 definiert, um das hydrolysierbare ungesättigte Organosilan auf das Polymer zu pfropfen, um ein silangepfropftes Polymer zu erhalten,
ii. Extrudieren des in Schritt i hergestellten silangepfropften Polymers, um eine extrudierte Polymerschicht zu bilden,
iii. Vernetzen der in Schritt ii hergestellten extrudierten Polymerschicht, um eine vernetzte Polymerschicht zu bilden.

14. Verfahren nach Anspruch 13, **dadurch gekennzeichnet, dass** der Mischschritt i in einem Extruder durchgeführt wird.

**RÉFÉRENCES CITÉES DANS LA DESCRIPTION**

**Documents brevets cités dans la description**

- US 4117195 A
- US 20030134969 A